# EUROPÄISCHE PATENTSCHRIFT

(11) **EP 0 450 314 B1**
(45) Veröffentlichungstag und Bekanntmachung des Hinweises auf die Patenterteilung: **24.05.1995**
(21) Anmeldenummer: 91103146.6
(22) Anmeldetag: 02.03.1991
(51) Int. Cl.: A01F 12/24, F16B 3/00, F16B 21/00

(54) **Einsatz für einen Dreschkorb einer Erntemaschine**
Insert for harvester threshing concave
Insert pour le contre-batteur d'une moissonneuse

(30) Priorität: 15.03.1990 US 494643
(43) Veröffentlichungstag der Anmeldung: 09.10.1991
(73) Patentinhaber: DEERE & COMPANY, Moline, Illinois 61265 (US)
(72) Erfinder: Bennett, Robert Edwin, Moline, Illinois 61265 (US)
(74) Vertreter: Feldmann, Bernhard

(56) Entgegenhaltungen:
- EP-A- 0 161 631
- DE-B- 1 006 196
- GB-A- 2 212 588
- US-A- 2 686 523
- US-A- 4 806 042
- DM-H137983; 9400, 9500 AND 9600 COMBINES EAST MOLINE, Illinois, US; John DeereHarvester Works of Deere & Co.:"Assembly instructions for installing concave inserts"
- IDEM

## Beschreibung

Die Erfindung betrifft einen Einsatz für einen Dreschkorb einer Erntemaschine mit Segmenten zur Bearbeitung von Dreschgut und mit einem Rahmen zur formschlüssigen Verbindung mit dem Dreschkorb über wenigstens eine Aufnahmebohrung, in die ein Haltebolzen zur Verbindung mit wenigstens einer Öffnung in dem Dreschkorb einsetzbar ist, sowie einen Dreschkorb mit einem Einsatz.

Ein bekannter Einsatz (John Deere Harvester Works of Deere and Co., DM-H-137983) für einen Dreschkorb weist einen Schlitz auf, mittels dessen er auf eine Querleiste eines Dreschkorbs aufgesetzt und mittels einer Schraubschelle dort gesichert werden kann. Dieser Einsatz ist insofern verbesserungsfähig, als seine Montage, insbesondere unter den gegebenen örtlichen Umständen, schwierig und zeitraubend ist.

Zwar zeigt die DE-B-1 006 196 bereits einen Dreschkorb mit einem Einsatz, der auf einfache Weise auf Dreschkorbdrähte aufgelegt wird und mittels einer unterhalb der Dreschkorbdrähte geführten Stange arretiert werden kann; dieser Einsatz erstreckt sich über die gesamte Breite des Dreschkorbs und verschließt somit einen wesentlichen Teil der zwischen zwei benachbarten Querleisten gegebenen Abscheidefläche. Dieser Nachteil läßt sich auch nicht vermeiden, da zur Befestigung des Einsatzes die Dreschkorbdrähte erforderlich sind.

Die der Erfindung zugrunde liegende Aufgabe wird darin gesehen, einen Einsatz für ein freies Feld zwischen Rippen und Querleisten eines Dreschkorbs sowie einen Dreschkorb selbst vorzuschlagen, die geeignet sind, ohne großen Aufwand innerhalb kurzer Zeit einen Dreschkorb mit unterschiedlich großer Gesamtdurchtrittsfläche zur Verfügung zu stellen.

Diese Aufgabe ist erfindungsgemäß durch die Merkmale der Patentansprüche 1 und 10 gelöst worden, wobei in den weiteren Patentansprüchen Merkmale aufgeführt sind, die die Lösung in vorteilhafter Weise weiterentwickeln.

Auf diese Weise bedarf es keiner Schraubschelle, die nur mittels eines Schraubenschlüssels festgezogen werden kann, sondern es reicht ein einfacher, mit üblichen Sicherungsmitteln festlegbarer Haltebolzen aus.

Wenn auch die formschlüssige Verbindung zwischen dem Dreschkorb, also einer seiner Rippen oder Querleisten, und dem Einsatz mittels speziell geformter Vorsprünge oder Arretierstiften und dergleichen erfolgen könnte, so läßt sich eine aus fertigungstechnischer Sicht einfache Formverbindung dadurch herstellen, daß der Einsatz einen Schlitz aufweist, in den ein Teil des Dreschkorbs, insbesondere eine Querleiste hineinpaßt und dessen begrenzende Wangen und der betreffende Teil des Dreschkorbs über den Haltebolzen verbunden werden können.

Vorteilhafterweise ist der Haltebolzen mit einer Halteeinrichtung gesichert und gegebenenfalls geführt, die ihn unverlierbar an dem Einsatz festlegt und ihn stets für die Verbindung des Einsatzes mit dem Dreschkorb bereit hält.

Die Halteeinrichtung, die auch aus einer Kette, einem Draht, einem Gestänge oder dergleichen bestehen könnte, wird einfach dadurch gebildet, daß an dem vorzugsweise aus Guß hergestellten Einsatz Aufnahmezungen angegossen werden, die zwischen sich einen Spalt für ein Sicherungselement, wie z. B. einen Splint, einen Stecker, eine Reibhülse oder dergleichen belassen. Insbesondere eine aus einem elastischen Kunststoff gebildete, den Halteschenkel konzentrisch umgebende Hülse legt den mit ihr verbundenen Haltebolzen in jeder seiner Stellungen unverrückbar fest.

Eine leichte Handhabbarkeit des Haltebolzens wird durch dessen U-förmige Ausgestaltung erreicht, da er dann an dem Boden zwischen den Schenkeln ergriffen werden kann, um den Verbindungsschenkel in oder außer Eingriff mit dem Dreschkorb zu bringen.

Der Haltebolzen gerät schwerlich aus der Verbindung mit der Hülse und der Halteeinrichtung, wenn der Halteschenkel länger ist als der Verbindungsschenkel und somit noch dann in Eingriff mit dem Einsatz ist, wenn der Verbindungsschenkel soweit in eine Außereingriffsstellung gezogen wurde, daß er nicht mehr durch den betreffenden Teil des Dreschkorbs ragt.

Ein Verlustiggehen des Haltebolzens ist vollkommen unmöglich, wenn der Halteschenkel zusätzlich zu der Hülse und auf der anderen Seite der Aufnahmezunge mit einer Sicherung gegen ein Entweichen aus den Halteöffnungen versehen ist. Diese Sicherung kann z. B. dadurch gebildet werden, daß der normalerweise im Querschnitt zylindrische Haltebolzen nach seiner Montage breit geschlagen wird und somit nicht mehr durch die Halteöffnungen paßt.

Eine Erntemaschine kann relativ schnell zur Ernte verschiedener Erntegüter gerüstet werden, wenn sie einen Dreschkorb aufweist, der zur Aufnahme des erfindungsgemäßen Einsatzes geeignet ist, d. h. die Öffnungen aufweist, die zum Einsatz des Haltebolzens erforderlich sind. Je nach der Anordnung und der Menge der vorgesehenen Öffnungen können entsprechend viele Einsätze montiert und somit die Gesamtgröße der Durchtrittsöffnungen verändert werden.

In der Zeichnung ist ein nachfolgend näher beschriebenes Ausführungsbeispiel der Erfindung dargestellt. Es zeigt:
- Fig. 1: eine Erntemaschine in Seitenansicht und in schematischer Darstellung,
- Fig. 2: einen Dreschkorb der Erntemaschine aus Figur 1 mit erfindungsgemäßen Einsätzen in perspektivischer Darstellung,
- Fig. 3: einen Einsatz aus Figur 2 in vergrößerter und perspektivischer Darstellung und
- Fig. 4: den Einsatz in Seitenansicht in seiner eingebauten Stellung.

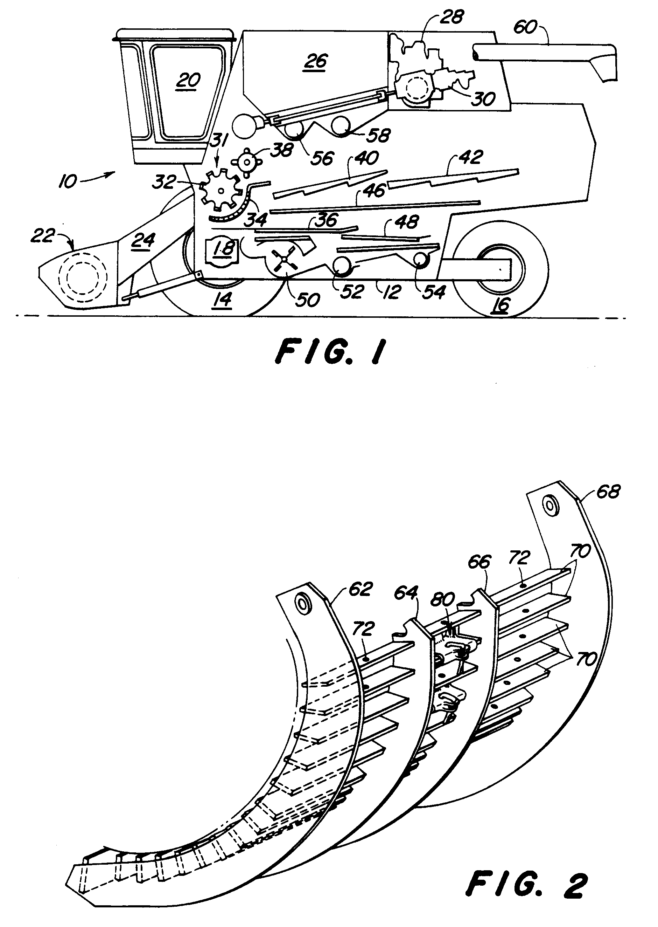

Eine in Figur 1 dargestellte Erntemaschine 10 ist als ein Mähdrescher ausgebildet, der ein Fahrwerk 12 und auf dem Boden abrollende vordere und rückwärtige Räder 14 und 16 aufweist. Die vorderen Räder 14 werden mittels eines Hydraulikmotors 18 angetrieben, der sich zwischen den Rädern 14 befindet. Eine Bedienungsperson bedient die Erntemaschine 10 von einer Fahrerkabine 20 aus. Eine Erntebergungsvorrichtung 22 erstreckt sich von dem Fahrwerk 12 aus nach vorne und wird benutzt, auf einem Feld angepflanzte Erntegüter abzuernten. Nach dem Erntevorgang wird das Erntegut durch ein Schrägförderergehäuse 24 in das Innere der Erntemaschine 10 befördert.

Ein Korntank 26 für das gereinigte geerntete Gut ist hinter der Fahrerkabine 20 oben auf der Erntemaschine 10 untergebracht. Hinter dem Korntank 26 erstreckt sich quer zu der Fahrtrichtung ein Verbrennungsmotor 28, der die Hauptantriebsquelle der Erntemaschine 10 ist und die Aggregate zur Fortbewegung, zum Ernten, zum Ausdreschen und zum Reinigen antreibt. Um die verschiedenen Aggregate antreiben zu können, ist der Verbrennungsmotor 28 ausgangsseitig mit einem Getriebe 30 verbunden. Eine ausführliche Beschreibung des Getriebes 30 geht aus der US-A-4,843,803 desselben Anmelders hervor, die hiermit ausdrücklich in diese Offenbarung mit einbezogen wird.

Zwischen den Seitenwänden des Fahrwerks 12 der Erntemaschine 10 erstreckt sich eine Dreschvorrichtung 31 und eine Reinigungsvorrichtung 39. Die Dreschvorrichtung 31 trennt das zu erntende Gut, meist Körner, aus dem gesamten Erntegut, meist Stroh, heraus und die Reinigungsvorrichtung 39 scheidet daraus Kurzstroh und Kaff ab. Das Erntegut wird durch das Schrägförderergehäuse 24 zu der Dreschvorrichtung 31 gefördert, die eine drehbare Dreschtrommel 32, einen sich quer und konzentrisch zu der Dreschtrommel 32 erstreckenden Dreschkorb 34 und eine drehbare Wendetrommel 38 enthält. Wenn das Erntegut zwischen der Dreschtrommel 32 und dem Dreschkorb 34 hindurch geführt wird, fallen herausgetrennte Körner und Kurzstroh durch Öffnungen in dem Dreschkorb 34 hindurch auf einen Vorbereitungsboden 36, während das verbleibende Erntegut, das Stroh und darin noch verbliebene Körner enthält, der Wendetrommel 38 zugeleitet werden.

Nach dem Dreschvorgang werden Stroh und Körner der Reinigungsvorrichtung 39 aufgegeben, die insbesondere Strohschüttler 40, 42 und einen Siebkasten 48 aufweist. Von der Wendetrommel 38 aus wird das Stroh den schwingenden Strohschüttlern 40 und 42 zugeleitet, die es zu dem rückwärtigen Ende der Erntemaschine 10 fördern, wo es wieder auf den Boden fällt. Körner und Kaff, die durch Öffnungen in den Strohschüttlern 40, 42 hindurch fallen, gelangen auf eine geneigt verlaufende und schwingende Wanne 46, die die Körner und das Kaff dem Vorbereitungsboden 36 aufgibt. Auf dem Vorbereitungsboden 36 werden die Körner und das Kaff z. B. mittels nicht gezeigter Schnecken dem Siebkasten 48 zugeleitet, der dazu dient, die Körner von dem Kaff zu trennen.

Die Körner und das Kaff, die auf den Vorbereitungsboden 36 und anschließend auf den Siebkasten 48 gelangen, werden einem Luftstrom unterworfen, der von einem Gebläse 50 erzeugt wird und das leichtere Kaff zum rückwärtigen Ende der Erntemaschine 10 hinausbläst, während die schwereren Körner in dem Siebkasten 48 einer Körnerschnecke 52 zufallen. Die Körnerschnecke 52 fördert die gereinigten Körner in einen Elevator, der sie wiederum in den Korntank 26 abgibt. Die Überkehr, d. h. die nicht ausgedroschenen Ähren des Getreides, fällt in eine Überkehrschnecke 54, die sie für einen weiteren Dreschvorgang zurück zu der Dreschtrommel 32 und dem Dreschkorb 34 fördert. Wenn der Korntank 26 entleert werden muß, werden die darin befindlichen Körner mittels Schnecken 56, 58 zu der Seite des Korntanks 26 bewegt, wo sie einer nicht gezeigten vertikalen Schnecke zufallen, die sie einem Entleerrohr 60 aufgibt.

Die Erfindung an sich ist auf eine vereinfachte Vorrichtung zum Einsetzen eines Einsatzes in den Dreschkorb 34 gerichtet. Der Dreschkorb 34, der in Figur 2 gezeigt ist, ist mit vier gekrümmten und sich längs erstreckenden Rippen 62, 64, 66, 68 versehen, die mittels einer Vielzahl von Querleisten 70 untereinander starr verbunden sind. Eine Öffnung 72 zur Aufnahme eines Einsatzes 80 ist in jede der Querleisten 70 zwischen benachbarten Rippen 62, 64, 66, 68 eingebracht. Der Dreschkorb 34 enthält ebenfalls nicht gezeigte, parallel zueinander verlaufende Drähte, die sich von der untersten, vorderen Querleiste 70 bis zur fünftletzten Querleiste 70 erstrecken. Diese Drähte erstrecken sich deshalb nicht weiter als bis zur fünftletzten Querleiste 70, weil in dem verbleibenden Bereich Durchlaßöffnungen mit größerem Querschnitt entstehen sollen, um eine größere Menge von Körnern abscheiden zu können.

Gemäß Figur 2 ist ein Einsatz 80 mittig zu der Quererstreckung des Dreschkorbs 34 auf die vorletzte Querleiste 70 aufgesetzt, und ein zweiter Einsatz 80 befindet sich ebenso mittig auf der viertletzten Querleiste 70. Jeder dieser Einsätze 80 ist mit Segmenten 90 versehen, die den Drähten gleichkommen sollen, die sich dann insgesamt von der letzten bis zu der fünftletzten Querleiste 70 in dem Mittenbereich des Dreschkorbs 34 erstrecken würden. In gleicher Weise können zusätzliche Einsätze 80 zwischen den weiteren Rippen 62, 64 und 66, 68 auf der vorletzten und viertletzten Querleiste 70 montiert werden.

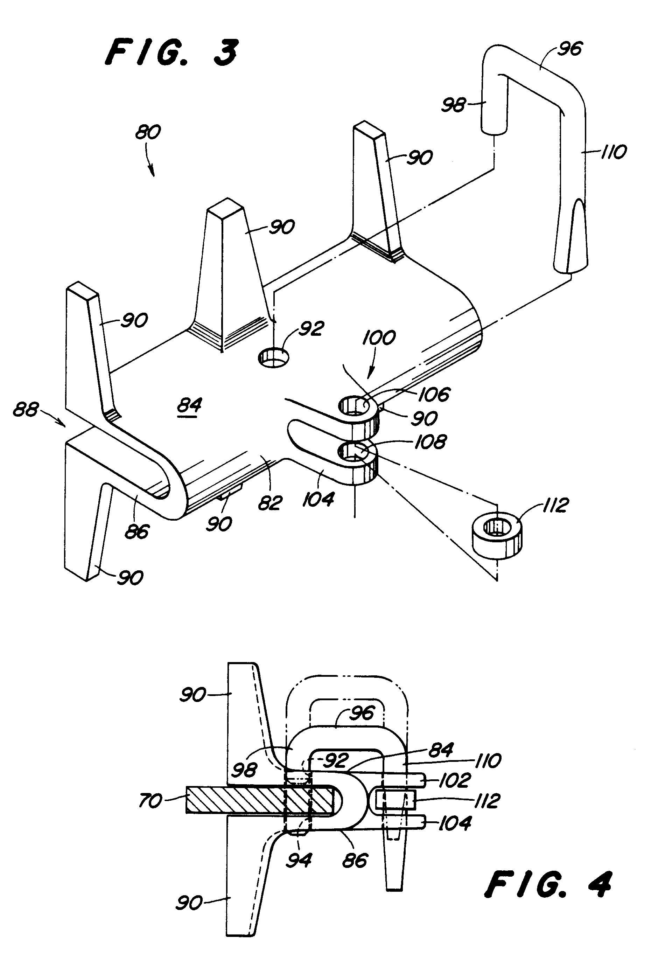

Der Einsatz 80 ist ausführlich in den Figuren 3 und 4 gezeigt und enthält einen Rahmen 82 mit einer ersten und einer zweiten Wange 84 und 86, die zwischen sich einen Schlitz 88 bilden. Senkrecht zu den Wangen 84 und 86 erstrecken sich die Segmente 90. Eine erste Aufnahmebohrung 92 befindet sich in der ersten Wange 84, und eine zweite Aufnahmebohrung 94 ist in die zweite Wange 86 eingearbeitet. Ein U-förmiger Haltebolzen 96, der einen Verbindungsschenkel 98 besitzt, kann in die erste und die zweiten Aufnahmebohrung 92 und 94 eingesetzt werden. Wenn sich die Querleiste 70 in dem Schlitz 88 befindet und sich die Öffnung 72 koaxial zu der ersten und der zweiten Aufnahmebohrung 92 und 94 erstreckt, kann der Verbindungsschenkel 98 durch die Öffnung 72 und die Aufnahmebohrungen 92, 94 gesteckt werden und somit den Einsatz 80 mit dem Dreschkorb 34 verbinden.

Der Einsatz 80 für den Dreschkorb 34 ist zudem mit einer Halteeinrichtung 100 versehen, die erste und zweite Aufnahmezungen 102 und 104 aufweist. Die erste Aufnahmezunge 102 wird von einer ersten Halteöffnung 106 durchdrungen, während die zweite Haltezunge 104 eine zweite Halteöffnung 108 enthält. Ein Halteschenkel 110 des Haltebolzens 96 ist in den ersten und zweiten Halteöffnungen 106, 108 längsverschiebe- und drehbeweglich geführt. Eine elastische Hülse 112 umgibt den Halteschenkel 110 im Bereich zwischen den beiden Aufnahmezungen 102, 104 reibschlüssig und bildet somit einen Verriegelungsmechanismus für den Haltebolzen 96 zwischen einer in die Querleiste 70 eingreifenden und einer dort nicht eingreifenden Stellung.

## Patentansprüche

1. Einsatz (80) für einen Dreschkorb (34) einer Erntemaschine (10) mit Segmenten (90) zur Bearbeitung von Dreschgut und mit einem Rahmen (82) zur formschlüssigen Verbindung mit dem Dreschkorb (34) über wenigstens eine Aufnahmebohrung (92, 94), in die ein Haltebolzen (96) zur Verbindung mit wenigstens einer Öffnung (72) in dem Dreschkorb (34) einsetzbar ist, dadurch gekennzeichnet, daß die Segmente (90) in der Art einer Fortsetzung der Drähte des Dreschkorbs (34) ausgebildet sind und zwischen sich Durchtrittsöffnungen für das Dreschgut belassen, und daß der Rahmen (82) einen Schlitz (88) zum Übergreifen einer Querleiste (70) des Dreschkorbs (34) aufweist, der an der den Segmenten (90) zugelegenen Seite offen ist.

2. Einsatz nach Anspruch 1, dadurch gekennzeichnet, daß der Rahmen (82) zwei Wangen (84, 86) enthält, die zwischen sich einen Schlitz (88) belassen und in die die Aufnahmebohrungen (92, 94) eingearbeitet sind.

3. Einsatz nach Anspruch 1 oder 2, dadurch gekennzeichnet, daß an dem Rahmen (82) eine Halteeinrichtung (100) zur Aufnahme des Haltebolzens (96) vorgesehen ist.

4. Einsatz nach Anspruch 3, dadurch gekennzeichnet, daß die Halteeinrichtung (100) zwei einen Spalt zwischen sich belassende Aufnahmezungen (102, 104) mit jeweils einer Halteöffnung (106, 108) enthält.

5. Einsatz nach einem oder mehreren der vorherigen Ansprüche, dadurch gekennzeichnet, daß der Haltebolzen (96) als U-Bügel mit einem Verbindungsschenkel (98) und einem Halteschenkel (110) ausgebildet ist, wobei der Verbindungsschenkel (98) die Aufnahmebohrung (92, 94) und die Öffnung (72) durchdringt und der Halteschenkel (110) die Halteöffnungen (106, 108).

6. Einsatz nach einem oder mehreren der vorherigen Ansprüche, dadurch gekennzeichnet, daß der Halteschenkel (110) im Bereich zwischen den Aufnahmezungen (102, 104) von einer reibschlüssig, jedoch noch beweglich an ihm anliegenden Hülse (112) umgeben ist.

7. Einsatz nach Anspruch 6, dadurch gekennzeichnet, daß die Hülse (112) aus elastischem Kunststoff gefertigt ist.

8. Einsatz nach einem oder mehreren der vorherigen Ansprüche, dadurch gekennzeichnet, daß der Halteschenkel (110) länger ist als der Verbindungsschenkel (98).

9. Einsatz nach einem oder mehreren der vorherigen Ansprüche, dadurch gekennzeichnet, daß der Halteschenkel (110) mit einer Sicherung gegen ein Entweichen aus den Halteöffnungen (106, 108) versehen ist.

10. Dreschkorb mit mehreren Rippen (62, 64, 66, 68) und Querleisten (70), die zwischen sich eine Zone kleiner Durchtrittsöffnungen und eine Zone großer Durchtrittsöffnungen belassen, wobei wenigstens eine große Durchtrittsöffnung mittels eines Einsatzes (80) verschließbar ist, dadurch gekennzeichnet, daß der Einsatz (80) nach einem oder mehreren der Ansprüche 1 bis 9 ausgebildet ist.

11. Dreschkorb nach Anspruch 10, dadurch gekennzeichnet, daß die Querleisten (70) mit wenigstens einer Öffnung (72) versehen sind und der Einsatz (80) mit seinem Schlitz (88) eine Querleiste (70) formschlüssig übergreift.

## Claims

1. An insert (80) for a concave (34) of a harvester (10), with segments (90) for processing threshed material and with a frame (82) for interlocking attachment to the concave (34) by means of at least one receiving bore (92, 94), into which can be fitted a retaining pin (96) for connection to at least one opening (72) in the concave (34), characterized in that the segments (90) are formed as a continuation of the wires of the concave (34) runing parallel to one another and leave openings therebetween for the threshed material, and in that the frame (82) has a slot (88) for engagement over a transverse bar (70) of the concave (34), which slot is open on the side facing the segments (90).

2. An insert according to claim 1, characterized in that the frame (82) has two cheeks (84, 86) which leave a slot (88) therebetween and in which the receiving bores (92, 94) are formed.

3. An insert according to claim 1 or 2, characterized in that a retaining device (100) for reception of the retaining pin (96) is provided on the frame (82).

4. An insert according to claim 3, characterized in that the retaining device (100) has two receiving tongues (102, 104) leaving a gap therebetween and each with a retaining opening (106, 108).

5. An insert according to one or more of the preceding claims, characterized in that the retaining pin (96) is formed as a U-yoke with a connecting arm (98) and a retaining arm (110), wherein the connecting arm (98) passes through the receiving bore (92, 94) and the opening (72) and the retaining arm (110) passes through the retaining openings (106, 108).

6. An insert according to one or more of the preceding claims, characterized in that the retaining arm (110) is embraced in the region between the receiving tongues (102, 104) by a sleeve (112) which is frictionally engaged with this arm but movable thereon.

7. An insert according to claim 6, characterized in that the sleeve (112) is made from elastic plastics material.

8. An insert according to one or more of the preceding claims, characterized in that the retaining arm (110) is longer than the connecting arm (98).

9. An insert according to one or more of the preceding claims, characterized in that the retaining arm (110) is provided with security against escape from the retaining openings (106, 108).

10. A concave with a plurality of ribs (62, 64, 66, 68) and transverse bars (70) which leave therebetween a zone of small through openings and a zone of large through openings, wherein at least one large through opening can be closed with an insert (80), characterized in that the insert (80) is formed in accordance with one or more of claims 1 to 9.

11. A concave according to claim 10, characterized in that the transverse bars (70) are provided with at least one opening (72) and the slot (88) of the insert (80) engages over a transverse bar (70) in interlocking manner.

## Revendications

1. Elément rapporté (80) pour un contre-batteur (34) d'une moissonneuse (10), comportant des segments (90) pour le traitement de la matière battue et un cadre (82) pour une fixation à engagement positif avec le contre-batteur (34) par l'intermédiaire d'au moins un trou de positionnement (92, 94), dans lequel peut être introduite une goupille d'arrêt (96) pour une liaison avec au moins une ouverture (72) dans le contre-batteur (34), caractérisé en ce que les segments (90) sont conçus comme une suite des fils, s'étendant parallèlement les uns aux autres, du contre-batteur (34) et définissent entre eux des ouvertures de passage pour la matière battue, et en ce que le cadre (82) présente une fente (88) pour recevoir une traverse (70) du contre-batteur (34), cette fente étant ouverte sur le côté comportant les segments (90).

2. Elément rapporté selon la revendication 1, caractérisé en ce que le cadre (82) comprend deux faces (84, 86) qui définissent entre elles une fente (88) et dans lesquelles sont pratiqués les trous de positionnement (92, 94).

3. Elément rapporté selon la revendication 1 ou 2, caractérisé en ce qu'il est prévu, sur le cadre (82), un dispositif de retenue (100) pour recevoir la goupille d'arrêt (96).

4. Elément rapporté selon la revendication 3, caractérisé en ce que le dispositif de retenue (100) comprend deux pattes (102, 104) comportant chacune une ouverture de retenue (106, 108) et laissant un intervalle entre elles.

5. Elément rapporté selon une ou plusieurs des revendications précédentes, caractérisé en ce que la goupille d'arrêt (96) est configurée en tant que pièce en U avec une branche de fixation (98) et avec une branche d'arrêt (110), la branche de fixation (98) passant dans les trous de positionnement (92, 94) et dans l'ouverture (72) et la branche d'arrêt (110) passant dans les ouvertures de retenue (106, 108).

6. Elément rapporté selon une ou plusieurs des revendications précédentes, caractérisé en ce que la branche d'arrêt (110) est entourée, dans la zone entre les pattes (102, 104) par une douille (112) appliquée sur elle à friction mais toutefois encore mobile.

7. Elément rapporté selon la revendication 6, caractérisé en ce que la douille (112) est fabriquée en une matière plastique élastique.

8. Elément rapporté selon une ou plusieurs des revendications précédentes, caractérisé en ce que la branche d'arrêt (110) est plus longue que la branche de fixation (98).

9. Elément rapporté selon une ou plusieurs des revendications précédentes, caractérisé en ce que la branche d'arrêt (110) est pourvue d'une sécurité contre toute sortie hors des ouvertures de retenue (106, 108).

10. Contre-batteur avec plusieurs nervures (62, 64, 66, 68) et des traverses (70), qui définissent entre elles une zone de petites ouvertures du passage et une zone de grandes ouvertures de passage, au moins une grande ouverture de passage pouvant être fermée au moyen d'un élément rapporté (80), caractérisé en ce que l'élément rapporté (80) est configuré selon une ou plusieurs des revendications 1 à 9.

11. Contre-batteur selon la revendication 10, caractérisé en ce que les traverses (70) sont pourvues d'au moins une ouverture (72) et en ce que l'élément rapporté (80) vient en contact à engagement positif par sa fente (88) avec une traverse (70).
